Europäisches Patentamt

European Patent Office

Office européen des brevets

(11) Publication number: **0 044 562**
**B1**

(12) **EUROPEAN PATENT SPECIFICATION**

(45) Date of publication of patent specification: **13.06.90**

(21) Application number: **81105749.6**

(22) Date of filing: **21.07.81**

(60) Divisional application 86106710 filed on 16.05.86.

(51) Int. Cl.⁵: **G 06 F 9/38,** G 06 F 15/347

(54) Vector data processor.

(30) Priority: **21.07.80 JP 98741/80**

(43) Date of publication of application:
**27.01.82 Bulletin 82/04**

(45) Publication of the grant of the patent:
**13.06.90 Bulletin 90/24**

(84) Designated Contracting States:
**DE FR GB**

(56) References cited:
FR-A-2 382 051
US-A-4 025 771
US-A-4 128 880

(73) Proprietor: **Hitachi, Ltd.
5-1, Marunouchi 1-chome
Chiyoda-ku Tokyo 100 (JP)**

(72) Inventor: **Omoda, Koichiro
1140, Togawa
Hadano-shi Kanagawa-ken (JP)**
Inventor: **Nagashima, Shigeo
1-40-27, Koyasu-cho
Hachioji-shi Tokyo (JP)**
Inventor: **Torii, Shunichi
4-815-1, Nishi-koigakubo
Kokubunji-shi Tokyo (JP)**

(74) Representative: **Strehl, Peter, Dipl.-Ing. et al
Patentanwälte Strehl Schübel-Hopf Groening
Maximilianstrasse 54 Postfach 22 14 55
D-8000 München 22 (DE)**

# EP 0 044 562 B1

## Description

Background of the invention

This invention relates to a vector data processor which includes a plurality of vector registers between a main storage and an arithmetic operation unit.

Such vector data processor is described, for example, in United State patent No. 4,128,880. Use of vector registers is very efficient in order to speed up vector processing. When a vector load instruction is executed, a vector data designated by the instruction is loaded into one of the vector registers designated by the instruction.

Other plural vector data can be loaded into different vector registers each in response to a vector load instruction.

When a vector operation instruction is executed, a vector data held by a vector register designated by the instruction is transferred to an arithmetic or logical operation unit and a resultant vector data obtained as a result of an operation is transferred to a vector register designated by the instruction.

The resultant vector data held by the vector register can be further transferred to an operation unit when another vector operation instruction designated the vector register. The resultant vector data may be stored into a main storage in response to a vector store instruction. According to this prior art, a vector data which is to receive an operation is transferred from a vector register to an operation unit. Therefore, a time required for the transfer is less than a transfer time required if the vector data is transferred from a main storage to the operation unit. Therefore, a processing time is reduced according to this prior art. As is described in the above United State patent, processing of short vector data is effectively reduced. Although the prior art vector processor has such an advantage, it has the following problem.

In some cases, it is necessary to perform an operation on selected vector elements of a vector data and not on all elements of the vector data. For that purpose, it is desirable to transfer only such selected vector elements from the main storage to a vector register.

The prior art vector data processor can transfer successive vector elements of a vector data successively from main storage to a vector register but cannot transfer arbitrary selected vector elements successively.

Another related problem exists with the prior art vector data processor. An operation can be done on such arbitrary vector elements successively and resultant vector elements are written into a vector register. When the resultant vector elements are to be transferred to the main storage, it often occurs that the resultant vector elements are to be transferred to the main storage as arbitrary selected elements of a vector data. The prior art vector data processor can transfer successively vector elements from a vector register to successive vector element locations of main storage but not to arbitrary selected vector element locations of main storage.

The problem will be explained below in more details. Addresses of successive elements of a vector data to be fetched from the main storage to a vector register can be generated successively by repeatedly adding an increment value to an address of the first vector element D(1). The increment value is an address difference between two successive vector elements. The successive vector elements can be successively fetched from main storage based upon the generated addresses and in parallel to the generation of the addresses and in parallel to the generation of the addresses. The same is true with writing of vector elements held by a vector register into main storage.

Thus, according to the prior art, successive vector elements can be fetched from or written into the main storage at a rapid speed.

Such a rapid fetching or writing cannot be realized in the prior art for arbitrary selected vector elements.

Arbitrary selected vector elements can be designated by a list vector format.

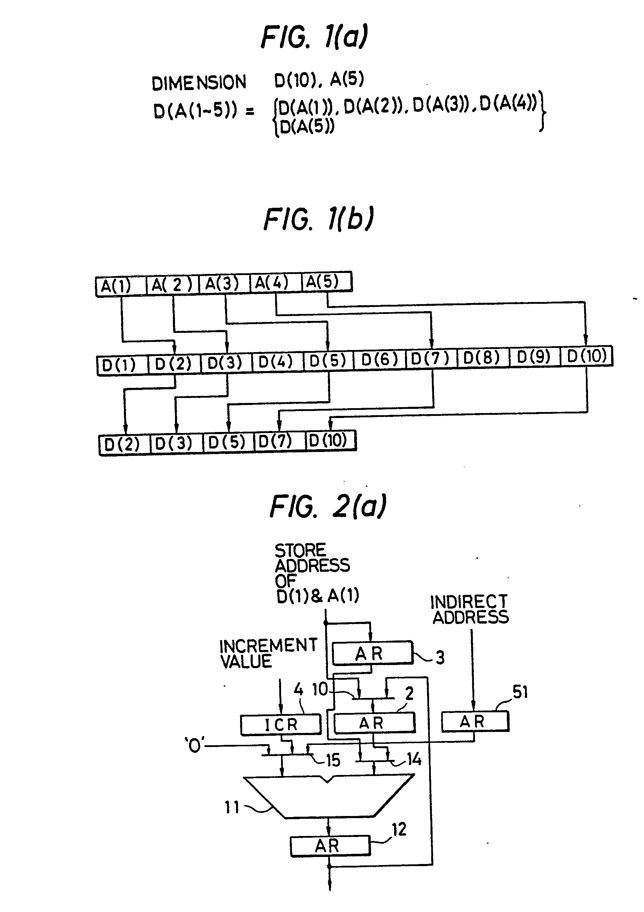

An example of the method of denoting the list vector format is indicated in Figure 1(a). This figure signifies that, from a vector element data (hereinafter simply written "data") D(1—10) consisting of 10 elements, the data of:

$$D(A(1—5))=\{D(A(1)), D(A(2)), D(A(3)), D(A(4)), D(A(5))\}$$

are selected in accordance with the content of an indirect address vector (A(1—5) consisting of 5 elements representing an indirect address. That is, as illustrated in Figure 1(b), within the data D(1—10) stored in a main storage, vector elements D(2), D(3), D(5), D(7) and D(10) which are respectively assigned by the indirect address vector elements (A(1—5) are selected. Each element of the indirect address vector A(1—5) indicates a distance from the start address of the data D(1—10), i.e. the address of D(1) to the address of element D(i) to be assigned. Hereinbelow, this distance shall be called the "indirect address".

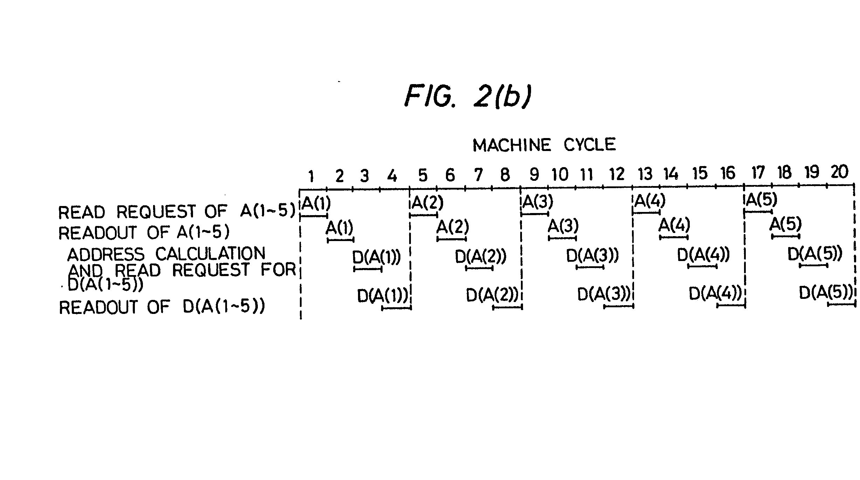

It is now supposed that the elements of data D(1—m) and the elements of an indirect address vector A(1—n) are respectively stored in the main storage regularly at equal distances and that $m \geqq n$ holds. The distance between the adjacent elements of a vector is called an "increment value". The steps to be performed in the case of fetching data D(A(1—n)) from the main storage to a vector register under such conditions will be described with reference to Figures 2(a) and 2(b).

Figure 2(a) shows the outline of an address adding circuit, which may be used in a prior art vector processor. Figure 2(b) shows a time chart of a data fetching operation in the case of n=5. Before fetching

2

the data D(A(1~5)), an increment value of the indirect address vector A(1—5) is set in an increment register 4, and an address of the first element D(1) of fetch data D(1—m) is set in an address register 3 and an address of a main storage (not shown) in which the first element A(1) of an indirect address vector A(1—5) is stored is set in an address register 2 through the selector 10.

First, the value of the address register 2 and the value of zero are applied to an address adder 11 through a selector 14 and a selector 15 respectively. The added result which designates the address of the first indirect address vector element A(1) in the main storage, is stored into an address register 12, and it is thereafter transmitted to the main storage, as part of a read request. Simultaneously, the value stored in the address register 12 is set in the address register 2 through the selector 10.

Subsequently, the first indirect address vector element A(1) is read out from the main storage and is set in an address register 51. The address of D(1) in the address register 3 and the address of A(1) in the address register 51 are applied to the address adder 11 through the selector 14 and the selector 15, respectively. The added result, i.e. the address of an element D(A(1)), is transmitted to the main storage through the address register 12, as part of a read request so that the element D(A(1)) is read out from the main storage.

Subsequently, in order to fetch an element D(A(2)), A(2) in the address register 2 and the increment value in the increment register 4 are applied to the adder 11 through the selectors 14 and 15, respectively. The result of the addition which designates the address of the second indirect address vector element A(2) in the main storage, is stored in the address register 12. Thereafter, the main storage is accessed by the use of the address of the second indirect address vector element A(2), and the indirect address vector element A(2) is set in the register 51. The indirect address vector element A(2) and the address of D(1) in the register 3 are applied to the adder 11 through the selectors 15 and 14, respectively, and the added result is used to read out the element D(A(2)) from the main storage.

Thereafter, the processings of the third and fifth elements are similarly executed to read out data D(A(3—5)). In this manner, the various processings of the read request of the indirect address A(i), the readout of A(i), the address calculation of the element D(A(i)) and the readout of D(A(i)) have ended, whereupon the processing of the next (i+1)-th element is executed.

However, it will be noted from the above description that generation of addresses of arbitrary selected vector elements D(A(1—5)) cannot be done successively, because fetching of an indirect address vector element A(i) is required before an address of a vector data D(A(i)) to be fetched is generated. This leads to the problem that the speed of the read-out operation of arbitrary selected elements of a vector data becomes slow.

While the above description has been made of the case of reading out the data in the list vector indication, a similar problem is involved in case of writing data. As an example of the writing operation, there is considered a case where, in Figures 1(a) and 1(b), the data D(A(1—5)) is deemed an output result in a certain operation by an operation unit and this value is written into a position for the data D(1—10) allotted in the main storage, in accordance with the value of the indirect address vector A(1—5). In this case, the indirect address vector A(1—5) may be either set in the main storage of, with the output result of a certain operation, stored in a vector register (registers for storing vector element data). In either case, there is the problem that the time of processing vector data is long.

Summary of the invention

This invention has for its object to provide a vector data processor in which, in the case of accessing a main storage to read or write data in the list vector indication therefrom or thereinto, address calculations for the access and accessing to the main storage with calculated addresses can be executed in parallel.

According to the invention, this object is accomplished by a vector data processor as specified in claim 1.

Preferred embodiments of this vector processor are specified in the subclaims.

For fetching vector elements in said vector data processor, a control circuit sequentially reads out a set of vector elements from one of the vector registers selected by a program instruction requiring vector data fetching by means of vector elements held by said one vector register, an address circuit performs an operation on the read-out set of vector elements in order to sequentially generate addresses for fetching a partial set of vector elements among a whole set of vector elements stored in the main storage in parallel to the reading out of the set of vector elements, the address circuit sequentially fetches the partial set of vector elements in parallel to the generation of the addresses, and the control circuit writes the fetched partial set of vector elements into one of the vector registers selected by the instruction.

These and other objects, features and advantages of the present invention will become more apparent from the following specific description of preferred embodiments when taken in conjunction with the accompanying drawings.

Brief description of the drawings

Figure 1(a) is a diagram showing an example of vector indication in the list vector format, while Figure 1(b) is a diagram showing the relationship between an indirect address and vector data to be read out with the address;

Figure 2(a) is a diagram of a vector data readout address calculating circuit, while Figure 2(b) is a time chart of the operation of the circuit;

Figure 3 is a schematic block diagram of a vector data processor according to this invention; and Figure 4 is a time chart of the operation of the processor in Figure 3.

Description of the preferred embodiments

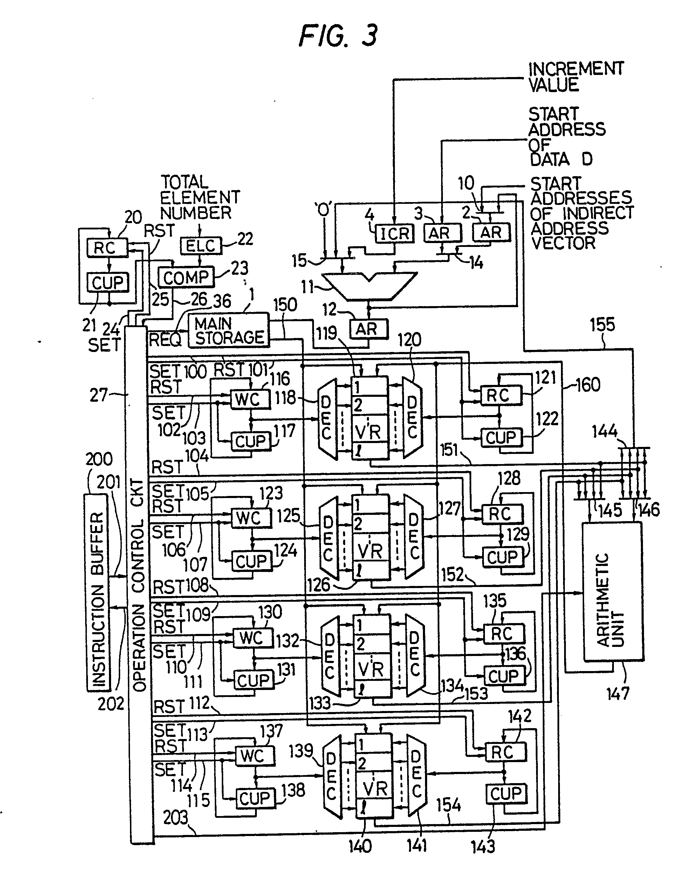

Figure 3 shows an embodiment of this invention. The figure illustrates the construction of a processor in the case where data D(1—m) and an indirect address vector A(1—n) are respectively stored in a main storage regularly at equal distances and where data D(A(1—n)) is fetched from the main storage with reference to the indirect address vector A(1—n). Herein, it is assumed that $1 \leqq A(i) \leqq m(i=1, 2, 3, ...n)$ holds.

In the figure 3, the system comprises a main storage 1, address registers 2, 3 and 12, an increment register 4, selectors 10, 14, and 15, an address adder 11, an element counter (EC) 20, countup (+1 addition) circuit 21, an element length register (ELR) 22, a comparator (COMP) 23, a set signal lines (SET) 24, a reset signal line (RST) 25, a coincidence signal line 26, an operation control circuit 27, a request signal (REQ) line 36, an instruction buffer 200, an instruction readout line 201, and an instruction end signal line 202. According to Figure 3 the vector data processor includes write address counters 116, 123, 130 and 137, countup circuits 117, 122, 124, 129, 131, 136, 138 and 143, decoders 118, 120, 125, 127, 132, 134, 139 and 141 vector registers 119, 126, 133 and 140 which can be designated by program instructions, read address counters 121, 128, 135 and 142, reset signal lines 100, 102, 104, 106, 108, 110, 112 and 114, set signal lines 101, 103, 105, 107, 109, 111, 113 and 115, selectors 144—146, an arithmetic unit 147, and an operation instruction signal line 203. The vector registers 119, 126, 133, 140 are constructed of l registers, and can store l items of data therein. The operation control circuit 27 may take the form of a conventional programmed sequence control of the type well known in the art.

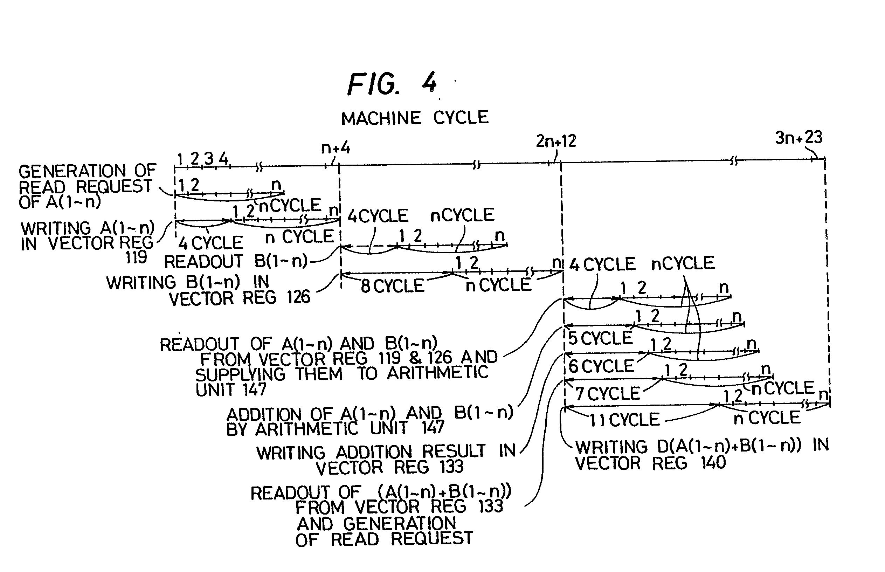

While a case of $n \leqq l$ will be referred to in the following description, data may be divided into processing units each consisting of l data items and then processed in case of $n > l$. A time chart of the present embodiment (the case of $n \geqq l$) is shown in Figure 4.

Hereunder will be described the operation of this embodiment in the case where data D(A(1—n))+B(1—n)) in the list vector indication is fetched from the main storage 1. In the embodiment of Figure 3 the vector registers 119, 126, 133 and 140 are capable of storing either indirect address vector or vector data other than the indirect address data. D(1—m), A(1—n) and B(1—n) are assumed to be stored in the main storage 1 regularly at equal distances and to satisfy the following condition

$$1 \leqq A(i) + B(i) \leqq m$$

(where i=1, 2, 3, ..., n).

In the embodiment, a read circuit and a write circuit is provided for each vector register. A write address counter 116, a countup circuit 117, and a decoder 118 form a write circuit for the vector register 119. A read address counter 121, a countup circuit 122 and a decoder 120 form a read circuit for the same vector register 119. The write address counter 116 sequentially provides write addresses to the decoder 118 by means of the operations of the countup circuit 117, so as to enable the decoder 118 to write vector elements at address locations designated by the generated write addresses. Similarly, the read address counter 121 sequentially provides read addresses to the decoder 120 by means of the operations of the countup circuit 117, so as to enable the decoder 120 to read vector elements from the vector register 119. The countup circuits 117, 122 respond to set signals respectively provided by way of lines 103 and 101 from the operation control circuit 27. Therefore, the write address counter 116 and the read address counter 121 are operable independently from each other so as to simultaneously indicate mutually different address locations in the vector register 119. The same can be said with other vector registers 126, 133, 140. Read or write operation to these vector registers can be instructed by the operation control circuit 27 after decoding instructions. These vector registers sequentially receive vector elements either read out from the main storage 1 or provided by the operation unit 147. These vector registers also sequentially provide vector elements to the operation unit 147 as operands therefore by way of the selectors 145 and 146. The operation unit 147 performs an operation in a pipelined manner on the operands provided from the vector registers. The operation to be performed is designated by the operation control circuit 27 by way of a line 203. The results of the operation are sequentially provided to one of the vector registers 119, 126, 133, 140. Thus, various vector operations can be performed on vector elements stored in the vector registers.

Vector elements held by these vector registers can be sequentially sent to the address adder 11 by way of the selector 144, the line 155 and the selector 15, so as to sequentially generate addresses to access the main storage 1 therewith.

Thus, in this embodiment, there are plural vector processing circuits like the operation unit 147 or the adder 11, each of which sequentially receives and/or provides vector elements. The present invention is not restricted to usage of these kinds of vector processing circuits.

Hereinafter, the operation of the embodiment of Figure 3 will be explained in connection with vector data fetching from the main storage 1 based upon a sum vector of two indirect address vectors A(1—n) and B(1—n). The indirect address vector element A(i) employed in this embodiment represents an address difference between an element X(i) and the first element X(1) of a vector. Therefore, vector elements of the vector X(1~m) can be selectively indicated by the indirect address vector elements A(1~n). We presume that all vector elements of vectors employed in this embodiment are spaced in the main storage 1 with a predetermined distance from its neighbouring elements of the same vector. The distance is called an address increment.

(1) Reading of A(1—n):

In the beginning, the number $n$ of elements is set in the element length register 22, the increment value is set in the increment register 4, and the address of the head element A(1) is set in the address register 2 through the selector 10.

Subsequently, the operation control circuit 27 loads a vector load instruction for reading out indirect addresses A(1—n) from the main storage 1 and for storing them into the vector register 119, from the instruction buffer 200 through the instruction readout line 201. The operation control circuit 27 decodes the instruction and performs controls necessary for this operation as follows. First, it transmits the reset signals 25 and 102 to clear the element counter 20 and the write counter 116 to zero, respectively. Continuously, it transmits the set signal 24 to increment the value of the element counter 20 by means of the countup circuit 21. At this time, the output of the countup circuit 21 is applied to the comparator 23 and is compared with the value of the element length register 22 therein. If, as the result of the comparing operation, both the values are equal, the coincidence signal 26 is transmitted to the operation control circuit 27 and is used for the decision of an end of the operation. The set signal 24 is transmitted in each of $n$ cycles until the coincidence signal 26 is detected, and the request signal 36 is transmitted to the main storage 1 in synchronism with the set signal 24.

The time chart of Figure 4 shows time relations after the read request of A(1) or the first request signal 36 is transmitted. As shown in Figure 4, the request signal 36 is transmitted every cycle in a manner to succeed from element No. 1 to No. $n$. Readout addresses are successively formed by the operation control circuit 27 as follows:

The address of the first element A(1) is formed by applying the value of the address register 2 and data "0" to the address adder 11 through the selectors 14 and 15, respectively, and adding both the values (in substance, the value itself of the address register 2). The added result is transmitted to the main storage 1 through the address register 12. At this time, the added result is also set in the address register 2 through the selector 10 so as to be used for forming the address of the next element A(2). The address of the second element A(2) is formed in such a way that the value of the address register 2 set by the address calculation of the first element and the value of the increment register 4 are applied to the address adder 11 through the selectors 14 and 15, respectively, and that both the values are added. The added result is transmitted to the main storage 1 through the address register 12, and is simultaneously set in the address register 2 through the selector 10, to be used in case of forming the address of the third element A(3). Thereafter, the addresses are successively formed by similar operations and are pipeline-controlled so as to be transmitted to the main storage every cycle in synchronism with generation of the request signal 36.

Subsequently, the set signal 103 is transmitted which is a signal delayed by four cycles with respect to the request signal 36 and which indicates a write operation to the vector register 119. Upon the transmission of the set signal 103, the value of the write counter (WC) 106 is applied to the countup circuit 117 so as to be incremented thereby, and the result is stored in the counter 116. At the same time, the value of the write address counter 116 before the countup is decoded by the decoder 39 and the indirect address vector A(1—n) read out from the main storage 1 is stored into the corresponding register of the vector register 119 assigned by the decoded result. It is supposed that the readout data from the main storage 1 reaches the vector register 119 in four cycles after the transmission of the request signal 36. As shown in Figure 4, the writing of the indirect address vector A(1—n) into the vector index register 40 is started four cycles after the first set signal 24 has been transmitted, that is, after the first request signal 36 has been transmitted. It is executed in each of $n$ cycles. In this way, the indirect address A(i) are successively retrieved from the main storage 1 and stored in the vector register 40.

(2) Reading of B(1—n):

After the end of the above processings, the operation control circuit 27 transmits the instruction end signal 202 to the instruction buffer 200. Continuously, it sets the increment value of the indirect address vector B in the increment register 4 and the start address in the address register 2. Subsequently, the operation control circuit 27 loads from the instruction buffer 200 by way of line 201 a vector load instruction to be processed next, i.e. an instruction of reading out B(1—n) from the main storage 1 and storing them into the vector register 126, and it performs controls necessary for these processings. First, it transmits the reset signals 25 and 106, to clear the element counter 20 and the write address counter 123 to zero, respectively. Subsequently, it transmits the set signal 24, the request signal 36 (synchronous with the set signal 24) and the set signal 107 (with the request signal 36 delayed four cycles) which indicates a writing operation to the vector register 126. The method of forming the readout address synchronous with the request signal 36 is the same as in the case of reading out addresses A(1—n). In synchronism with the set signals 107, addresses B(1—n) read out from the main storage 1 are successively stored into the vector register 126 connected with the main storage 1 through the data line 150. The control in this case is made as in the case of the vector A(1—n) by the use of the write address counter 123, the countup circuit 124 and the decoder 125. As illustrated in Figure 4, the request signal 36 has its transmission started at the fourth cycle after A(n) has been stored into the vector register 119, and it is transmitted every cycle in a manner to be repeated *n* times. Addresses B(1—n) are successively stored into the vector register 126 with the delay of four cycles with respect to the request signals 36.

(3) Operation of A(1—n)+B(1—n) and Reading of D(A(1—n)+B(1—n)):

(a) After the end of the processings of item (2), the operation control circuit 27 transmits the instruction end signal 202 to the instruction buffer 200. Subsequently, it sets the start address of D(1—m), i.e. the address of the element D(1) in the address register 3.

At the next step, the operation control circuit 27 loads from the instruction buffer 200 through the instruction readout line 201 a vector operation instruction of reading out A(1—n) and B(1—n) from the vector registers 119 and 126, respectively, and adding them in the arithmetic unit 147 and then storing the added result A(1—n)+B(1—n) into the vector register 133, and a vector load instruction requiring reading, as an indirect address vector, the data A(1—n)+B(1—n) stored in the vector register 133 and then reading out D(A(1—n)+B(1—n)) from the main storage 1 based upon the indirect address vector A(1—n)+B(1—n) and storing this data D(A(1—n)+B(1—n)) into the vector register 140. Thereafter, the operation control circuit 27 performs controls necessary for these processings. First, it transmits the reset signals 25, 100, 104, 110, 108 and 114, to clear the element counter 20, the read address counter 121, the read address counter 128, the write address counter 130, the read address counter 135 and the write address counter 137 to zero, respectively. Continuously, it transmits the set signal 24 to increment the value of the element counter 20 by means of the countup circuit 21. At this time, the output of the countup circuit 21 is applied to the comparator 23 and is compared with the value of the element length register 22 therein to detect an end of operation as mentioned before. The set signal 24 is transmitted every cycle in a manner to be repeated *n* times until the coincidence signal 26 is detected, and the set signal 101 and the set signal 105 for the vector register 119 and 126 are transmitted from the operation control circuit 27 in synchronism with this set signal 24. In addition, the operation instruction signal 203 with the set signal 101 delayed one cycle and the set signal 111 with the same delayed two cycles are transmitted. Upon the transmission of the set signal 101, the values of A(1—n) stored in the vector register 119 are read out and are applied to the arithmetic unit 147 through the line 151 as well as the selector 145. Upon the transmission of the set signal 105, the values of B(1—n) stored in the vector register 126 are read out and are applied to the arithmetic unit 147 through the line 152 as well as the selector 146. In case of reading out A(1—n) from the vector register 119, the control is effected with the read address counter 121, the countup circuit 122 and the decoder 120, while in case of reading out B(1—n) from the vector register 126, the control is effected with the read address counter 128, the countup circuit 129 and the decoder 127. The indirect address vector data A(1—n) and B(1—n) read out from the vector registers 119 and 126 is applied to the arithmetic unit 147, is added in one cycle on the basis of the operation instruction signal 203 instructive of the addition, and the result A(1—n)+B(1—n) is stored into the vector register 133 through the line 160 in one cycle after the operation. The storing of the operated result is made in synchronism with the set signal 111. At this time, the control is effected with the write address counter 130, the countup circuit 131 and the decoder 132. The point of time at which the first elements A(1) and B(1) are respectively read out from the vector registers 119 and 126 is, as illustrated in Figure 4, four cycles after B(n) has been read out from the main storage 1 and stored into the vector register 126 in the processings of the preceding time. Thereafter, A(1—n) and B(1—n) are successively read out in each of *n* cycles. The operation in the arithmetic unit 147 is performed one cycle after the readout, and the storing of the operated result two cycles after the readout.

(b) Subsequently, the set signal 109 which is a signal with the set signal 101 delayed three cycles, as well as the request signal 36, and the set signal 115 which is a signal with the set signal 101 delayed seven cycles, are transmitted from the operation control circuit 27 so that each of the result vector element A(i)+B(i) is read out after writing thereof and before completion of the writing of all result vector elements. Upon the transmission of the set signal 109, A(1—n)+B(1—n) is read out from the vector register 133 and are transferred to the address adder 11 through the line 153, the selector 144, the line 155 and the selector 15. The other input of the address adder receives the value of the address register 3, these two inputs are added, and the result is transferred to the main storage 1 through the address register 12 as the readout address of D(A(1—n)+B(1—n)). In synchronism with the address transfer, the request signal 36 stated above is transmitted from the operation control circuit 27 to the main storage 1. In the readout of the vector register 133, the control is effected with the read address counter 135, the countup circuit 136 and the decoder 134. The readout data D(A(1—n)+B(1—n)) from the main storage 1 reaches the vector register 140 through the line 150 and is stored therein in four cycles after the transmission of the request signal 36. This storing is controlled with the write address counter 137, the countup circuit 138 and the decoder 139 in synchronism with the set signal 155.

As illustrated in Figure 4, the readout of the indirect address vector A(1—n)+B(1—n)) from the vector register 133 and the readout request for the vector data D(A(1—n)+B(1—n) are started one cycle after A(1)+B(1) delivered from the adder 147 has been stored into the vector register 133.

Thus, the vector register 133 reads the written vector elements one cycle after writing of each vector element. Thereafter, they are made every cycle in a manner to succeed *n* times. The readout data D(A(1—n)+B(1—n)) from the main storage 1 is stored in the vector register 140 with a delay of four cycles from the readout request or the transmission of the request signal 36. After the last element D(A(n)+B(n)) has been stored into the vector register 140, the operation control circuit 27 transmits the instruction end signal 202 to the instruction buffer 200, to complete the processings.

In the case where, by way of example the data D(A(1—n)+B(1—n)) stored in the vector register 140 are sequentially transferred to the arithmetic unit 147, the transfer is controlled with the read counter 142 (which is cleared to zero by the reset signal 112 before use as stated before), the countup circuit 143 and the decoder 141, and the data are read out in synchronism with the set signals 113. It has been assumed that the readout data from the main storage 1 is stored into the vector register four cycles after the transmission of the request signal 36, but this case is not restrictive. The overhead of four cycles has been assumed as the partition of instruction processings, but the control ought to be made so that this number of cycles may become as small as possible. Although, in the present embodiment, the case of reading out the data in the list vector indication from the main storage has been described, also a case of writing data into the main storage can be readily realized in the same way.

As set forth above, according to this invention, generation of the reading or writing addresses of vector data D(A(1—n)+B(1—n)) which comprises selected vector elements of a whole vector data D(1—m) and fetching of the vector data into a register can be overlapped. Therefore, the processing speed of vector data is enhanced.

**Claims**

1. A vector data processor, comprising:

a main storage (1) which holds plural sets of vector elements {A(i)}, {B(i)}, {D(i)} at respective address locations,

a plurality of vector registers (119, 126, 133, 140) connected to said main storage (1);

a control circuit (27; 116 to 118, 120 to 125, 127 to 132, 134 to 139, 141 to 143) which responds to program instructions and sequentially writes a set of vector elements {A(i)}, {B(i)}, {A(i)+B(i)}, {D[A(i)+B(i)]} provided to said vector registers into one of said plurality of vector registers (119, 126, 133, 140) selected by a program instruction and/or which sequentially reads a set of vector elements {A(i)}; {B(i)}, {A(i)+B(i)} {D[A(i)+B(i)]}, from one of said plurality of vector registers selected by a program instruction; and

an operation unit (147) which performs an arithmetical operation on a set of vector elements {A(i)}, {B(i)}, {D[A(i)+B(i)]} sequentially read out of said vector registers to provide sequentially said vector registers with a set of vector elements {A(i)+B(i)} corresponding to the results of the operation; characterized in

that the control circuit sequentially reads out a set of vector elements {A(i)+B(i)} from one (133) of said plurality of vector registers selected by a program instruction requiring vector data fetching by means of vector elements held by said one vector register,

that an address circuit (3, 11, 12) performs an operation on the read out set of vector elements, in order to sequentially generate addresses for fetching a partial set of vector elements {D[A(i)+B(i)]} to be fetched among a whole set of vector elements {D(i)} stored in said main storage, in parallel to the reading out of the set of vector elements,

that the address circuit sequentially fetches the partial set of vector elements {D[A(i)+B(i)]} in parallel to the generation of the addresses, and

that the control circuit writes the fetched partial set of vector elements into one of said vector registers selected by the instruction.

2. A vector data processor according to claim 1, characterized in that the values of the read out vector elements [A(i)+B(i)] have a specific arithmetic relation with the address differences between a predetermined address relating to the whole set of vector elements {D(i)} and addresses of respective vector elements D[A(i)+B(i)] of the partial set of vector elements {D[A(i)+B(i)]}, and that said address circuit (3, 11, 12) includes an arithmetic operation unit (11) for performing an arithmetic operation on the predetermined address and each vector element of the read out set of vector elements, to generate an address for each vector element of the partial set of vector elements.

3. A vector data processor according to claim 2, characterized in that the values of respective vector elements of the partial set of vector elements are equal to the address difference; and that the arithmetic operation unit is an adder (11).

4. A vector data processor according to claim 3, characterized in that the predetermined address is an address of a starting vector element D(1) of the whole set of vector elements.

5. A method for fetching vector elements in a vector data processor which includes a main storage (1) which holds plural sets of vector elements {A(i)}, {B(i)}, {D(i)} at respective address locations, a plurality of vector registers (119, 126, 133, 140) connected to said main storage (1); and an operation unit (147) which performs an arithmetical operation on a set of vector elements {A(i)}; {B(i)}, {D[A(i)+B(i)]} sequentially read out of said vector registers to provide sequentially said vector registers with a set of vector elements {A(i)+B(i)} corresponding to the results of the operation; characterized by the steps

(a) sequentially reading out a set of vector elements {A(i)+B(i)} from one (133) of said plurality of vector registers, selected by a program instruction requiring vector data fetching by means of vector elements held by the one vector register;

(b) performing an operation on the read out set of vector elements in order to sequentially generate

7

addresses for a partial set of vector elements {D[A(i)+B(i)]} to be fetched among a whole set of vector elements {D(i)} in parallel to the reading of the vector elements and sequentially fetching the partial set of vector elements {D[A(i)+B(i)]} in parallel to the generation of the addresses and

(c) writing the fetched partial set of vector elements into one of said plurality of vector registers selected by the instruction.

6. A method according to claim 5, characterized in that the values of the read out vector elements [A(i)+B(i)] have a specific arithmetic relation with address differences between a predetermined address related to the whole set of vector elements {D(i)} and addresses of respective vector elements D[A(i)+B(i)] of the partial set of vector elements {D[A(i)+B(i)]}, and in that the operation is an arithmetic operation on the predetermined address and each vector element of the partial set of vector elements, to generate an address for each vector element of the partial set of vector elements.

7. A method according to claim 6, characterized in that the values of the respective vector elements of the partial set of vector elements are equal to the address difference; and that the operation is addition of the predetermined address and each vector element of the partial set of vector elements.

8. A method according to claim 7, characterized in that the predetermined address is an address of a starting vector element D(1) of the whole set of vector elements.

**Patentansprüche**

1. Vektordaten-Verarbeitungsgerät, umfassend
einen Hauptspeicher (1), der mehrere Sätze von Vektorelementen {A(i)}, {B(i)}, {D(i)} an jeweiligen Adressenplätzen enthält,
mehrere mit dem Hauptspeicher (1) verbundene Vektorregister (119, 126, 133, 140),
eine Steuerschaltung (27; 116 bis 118, 120 bis 125, 127 bis 132, 134 bis 139, 141 bis 143), die auf Programmbefehle anspricht und einen Satz von den Vektorregistern zugeführten Vektorelementen {A(i)}; {B(i)}, {A(i)+B(i)}, {D[A(i)+B(i)]} in ein von einem Programmbefehl ausgewähltes der mehreren Vektorregister (119, 126, 133, 140) sequentiell einschreibt und/oder einen Satz von Vektorelementen {A(i)}; {B(i)}, {A(i)+B(i)}, {D[A(i)+B(i)]} aus einem von einem Programmbefehl ausgewählten der mehreren Vektorregister sequentiell ausliest, und
eine Operationseinheit (147), die an einem Satz von aus den Vektorregistern sequentiell augelesenen Vektorelementen {A(i)}; {B(i)}, {D[A(i)+B(i)]} eine arithmetische Operation ausführt, um die Vektorregister sequentiell mit einem Satz von Vektorelementen {A(i)+B(i)} entsprechend den Operationsergebnissen zu versorgen, dadurch gekennzeichnet,
daß die Steuerschaltung sequentiell einen Satz von Vektorelementen {A(i)+B(i)} aus einem (133) der mehreren Vektorregister ausliest, das durch einen Programmbefehl ausgewählt ist, der das Abrufen von Vektordaten mittels in dem besagten einen Vektorregister enthaltenen Vektorelementen anfordert,
daß eine Adressenschaltung (3, 11, 12) an dem ausgelesenen Satz von Vektorelementen eine Operation ausführt, um parallel zum Auslesen des Satzes von Vektorelementen sequentiell Adressen zum Abrufen eines Teilsatzes von Vektorelementen {D[A(i)+B(i)]} zu erzeugen, der aus einem Gesamtsatz von in dem Hauptspeicher gespeicherten Vektorelementen {D(i)} abzurufen ist,
daß die Adressenschaltung den Teilsatz von Vektorelementen {D[A(i)+B(i)]} parallel zur Erzeugung der Adressen sequentiell abruft, und
daß die Steuerschaltung den abgerufenen Teilsatz von Vektorelementen in ein von dem Befehl ausgewähltes der Vektorregister einschreibt.

2. Vektordaten-Verarbeitungsgerät nach Anspruch 1, dadurch gekennzeichnet, daß die Werte der ausgelesenen Vektorelemente [A(i)+B(i)] eine spezifische arithmetische Relation zu den Adressendifferenzen zwischen einer auf den Gesamtsatz von Vektorelementen {D(i)} bezogenen vorgegebenen Adresse und den Adressen der jeweiligen Vektorelemente D[A(i)+B(i)] des Teilsatzes von Vektorelementen {D[A(i)+B(i)]} aufweist, und daß die Adressenschaltung (3, 11, 12) eine arithmetische Operationseinheit (11) zur Ausführung einer arithmetischen Operation an der vorgegebenen Adresse und jedem Vektorelement des ausgelesenen Satzes von Vektorelementen umfaßt, um eine Adresse für jedes Vektorelement des Teilsatzes von Vektorelementen zu erzeugen.

3. Vektordaten-Verarbeitungsgerät nach Anspruch 2, dadurch gekennzeichnet, daß die Werte jeweiliger Vektorelemente des Teilsatzes von Vektorelementen gleich der Adressendifferenz sind, und daß die arithmetische Operationseinheit ein Addierer (11) ist.

4. Vektordaten-Verarbeitungsgerät nach Anspruch 3, dadurch gekennzeichnet; daß die vorgegebene Adressen eine Adresse eines Anfangs-Vektorelements (D1) des Gesamtsatzes von Vektorelementen ist.

5. Verfahren zum Abrufen von Vektorelementen in einem Vektordaten-Verarbeitungsgerät, das einen mehrere Sätze von Vektorelementen {A(i)}, {B(i)}, {D(i)} an jeweiligen Adressenplätzen enthaltenden Hauptspeicher (1), mehrere mit dem Hauptspeicher (1) verbundene Vektorregister (119, 126, 133, 140) und eine Operationseinheit (147) umfaßt, die die an einem Satz von aus den Vektorregistern sequentiell ausgelesenen Vektorelementen {A(i)}; {B(i)}, {D[A(i)+B(i)]} eine arithmetische Operation ausführt, um die Vektorregister sequentiell mit einem Satz von Vektorelementen {A(i)+B(i)} entsprechend den Operationsergebnissen zu versorgen, gekennzeichnet durch die folgenden Schritte:

(a) sequentielles Auslesen eines Satzes von Vektorelementen {A(i)+B(i)} aus einem (133) der mehreren Vektorregister, das durch einen Programmbefehl ausgewählt wird, der das Abrufen von Vektordaten mittels in dem besagten einen Vektorregister enthaltenen Vektorelementen anfordert,

(b) Ausführen einer Operation an dem ausgelesenen Satz von Vektorelementen, um parallel zum Auslesen der Vektorelemente sequentiell Adressen für einen Teilsatz von Vektorelementen {D[A(i)+B(i)]}, der aus einem Gesamtsatz von Vektorelementen {D(i)} abzurufen ist, und um den Teilsatz von Vektorelementen {D[A(i)+B(i)]} parallel zur Erzeugung der Adressen sequentiell abzurufen, und

(c) Einschreiben des abgerufenen Teilsatzes von Vektorelementen in ein von dem Befehl ausgewähltes der mehreren Vektorregister.

6. Verfahren nach Anspruch 5, dadurch gekennzeichnet, daß die Werte der ausgelesenen Vektorelemente [A(i)+B(i)] eine spezifische arithmetische Relation zu den Adressendifferenzen zwischen einer auf den Gesamtsatz von Vektorelementen {D(i)} bezogenen vorgegebenen Adresse und den Adressen der jeweiligen Vektorelemente D[A(i)+B(i)] des Teilsatzes von Vektorelementen {D[A(i)+B(i)]} aufweist, und daß die Operation eine arithmetische Operation an der vorgegebenen Adresse und jedem Vektorelement des Teilsatzes von Vektorelementen ist, um eine Adresse für jedes Vektorelement des Teilsatzes von Vektorelementen zu erzeugen.

7. Verfahren nach Anspruch 6, dadurch gekennzeichnet, daß die Werte der jeweiligen Vektorelemente des Teilsatzes von Vektorelementen gleich der Adressendifferenz sind, und daß die Operation eine Addition der vorgegebenen Adresse und jedes Vektorelements des Teilsatzes von Vektorelementen ist.

8. Verfahren nach Anspruch 7, dadurch gekennzeichnet, daß die vorgegebene Adresse eine Adresse eines Anfangs-Vektorelements (D1) des Gesamtsatzes von Vektorelementen ist.

**Revendications**

1. Processeur de données vectorielles, comportant:

une mémoire principale (1) conservant plusieurs jeux d'éléments vectoriels {A(i)}, {B(i)}, {D(i)} en des emplacements d'adresse respectifs,

une pluralité de registres vectoriels (119, 126, 133, 140) reliés à ladite mémoire principale (1);

un circuit de commande (27; 116 à 118, 120 à 125, 127 à 132, 134 à 139, 141 à 143) qui répond à des instructions de programme et enregistre séquentiellement un jeu d'éléments vectoriels {A(i)}; {B(i)}, {A(i)+B(i)}, {D[A(i)+B(i)]} délivrés auxdits registres vectoriels dans l'un de ladite pluralité de registres vectoriels (119, 126, 133, 140) sélectionné par une instruction de programme et/ou qui lit séquentiellement un jeu d'éléments vectoriels {A(i)}; {B(i)}; {A(i)+B(i)}; {D[A(i)+B(i)]} d'un de ladite pluralité de registres vectoriels sélectionné par une instruction de programme; et

une unité d'opération (147) qui effectue une opération arithmétique sur un jeu d'éléments vectoriels {A(i)}, {B(i)}, {D[A(i)+B(i)]} lus séquentiellement desdits registres vectoriels pour délivrer séquentiellement auxdits registres vectoriels un jeu d'éléments vectoriels {A(i)+B(i)} correspondant aux résultats de l'opération; caractérisé en ce que le circuit de commande lit séquentiellement un jeu d'éléments vectoriels {A(i)+B(i)} d'un (133) de ladite pluralité de registres vectoriels sélectionné par une instruction de programme nécessitant une extraction de données vectorielles au moyen d'éléments vectoriels conservés par ledit registre vectoriel, en ce qu'un circuit d'adresse (3, 11, 12) effectue une opération sur le jeu lu d'éléments vectoriels, afin de générer séquentiellement des adresses en vue d'extraire un jeu partiel d'éléments vectoriels {D[A(i)+B(i)]} à extraire parmi un jeu complet d'éléments vectoriels {D(i)} mémorisés dans ladite mémoire principale, parallèlement à la lecture du jeu d'éléments vectoriels, en ce que le circuit d'adresse extrait séquentiellement le jeu partiel d'éléments vectoriels {D[A(i)+B(i)]} parallèlement à la génération des adresses, et en ce que le circuit de commande enregistre le jeu partiel extrait d'éléments vectoriels dans l'un desdits registres vectoriels sélectionné par l'instruction.

2. Processeur de données vectorielles selon la revendication 1, caractérisé en ce que les valeurs des éléments vectoriels lus [A(i)+B(i)] possèdent une relation arithmétique spécifique avec les différences d'adresse entre une adresse prédéterminée liée au jeu complet d'éléments vectoriels {D(i)} et des adresses d'éléments vectoriels respectifs D[A(i)+B(i)] du jeu partiel d'éléments vectoriels {D[A(i)+B(i)]}, et en ce que ledit circuit d'adresse (3, 11, 12) comprend une unité d'opération arithmétique (11) pour effectuer une opération arithmétique sur l'adresse prédéterminée et chaque élément vectoriel du jeu lu d'éléments vectoriels, pour générer une adresse pour chaque élément vectoriel du jeu partiel d'éléments vectoriels.

3. Processeur de données vectorielles selon la revendication 2, caractérisé en ce que les valeurs d'éléments vectoriels respectifs du jeu partiel d'éléments vectoriels sont égales à la différence d'adresse; et en ce que l'unité d'opération arithmétique est un additionneur (11).

4. Processeur de données vectorielles selon la revendication 3, caractérisé en ce que l'adresse prédéterminée est une adresse d'un élément vectoriel de début D(1) du jeu complet d'éléments vectoriels.

5. Procédé d'extraction d'éléments vectoriels dans un processeur de données vectorielles qui comprend une mémoire principale (1) conservant plusieurs jeux d'éléments vectoriels {A(i)}, {B(i)}, {D(i)} en des emplacements d'adresse respectifs, une pluralité de registres vectoriels (119, 126, 133, 140) reliés à ladite mémoire principale (1); et une unité d'opération (147) qui effectue une opération arithmétique sur un jeu d'éléments vectoriels {A(i)}; {B(i)}, {D[A(i)+B(i)]} lus séquentiellement desdits registres vectoriels pour délivrer séquentiellement auxdits registres vectoriels un jeu d'éléments vectoriels {A(i)+B(i)} correspondant aux résultats de l'opération; caractérisé par les étapes consistant à

(a) lire séquentiellement un jeu d'éléments vectoriels {A(i)+B(i)} d'un (133) de ladite pluralité de registres vectoriels, sélectionné par une instruction de programme demandant une extraction de données vectorielles à l'aide d'éléments vectoriels conservés par ledit registre vectoriel;

(b) effectuer une opération sur le jeu lu d'éléments vectoriels afin de générer séquentiellement des adresses pour un jeu partiel d'éléments vectoriels {D[A(i)+B(i)]} à extraire parmi un jeu complet d'éléments vectoriels {D(i)} parallèlement à la lecture des éléments vectoriels et extraire séquentiellement le jeu partiel d'éléments vectoriels {D[A(i)+B(i)]} parallèlement à la génération des adresses et

(c) enregistrer le jeu partiel extrait d'éléments vectoriels dans l'un de ladite pluralité de registres vectoriels sélectionné par l'instruction.

6. Procédé selon la revendication 5, caractérisé en ce que les valeurs des éléments vectoriels lus [A(i)+B(i)] possèdent une relation arithmétique spécifique avec des différences d'adresse entre une adresse prédéterminée liée au jeu complet d'éléments vectoriels {D(i)} et des adresses d'éléments vectoriels respectifs D[A(i)+B(i)] du jeu partiel d'éléments vectoriels {D[A(i)+B(i)]}, et en ce que l'opération est une opération arithmétique sur l'adresse prédéterminée et chaque élément vectoriel du jeu partiel d'éléments vectoriels, pour générer une adresse pour chaque élément vectoriel du jeu partiel d'éléments vectoriels.

7. Procédé selon la revendication 6, caractérisé en ce que les valeurs des éléments vectoriels respectifs du jeu partiel d'éléments vectoriels sont égales à la différence d'adresse; et en ce que l'opération est une addition de l'adresse prédéterminée et de chaque élément vectoriel du jeu partiel d'éléments vectoriels.

8. Procédé selon la revendication 7, caractérisé en ce que l'adresse prédéterminée est une adresse d'un élément vectoriel de début D(1) du jeu complet d'éléments vectoriels.

## FIG. 1(a)

DIMENSION    D(10), A(5)

$$D(A(1\sim5)) = \begin{Bmatrix} D(A(1)), D(A(2)), D(A(3)), D(A(4)) \\ D(A(5)) \end{Bmatrix}$$

## FIG. 1(b)

| A(1) | A(2) | A(3) | A(4) | A(5) |
|------|------|------|------|------|

| D(1) | D(2) | D(3) | D(4) | D(5) | D(6) | D(7) | D(8) | D(9) | D(10) |
|------|------|------|------|------|------|------|------|------|-------|

| D(2) | D(3) | D(5) | D(7) | D(10) |
|------|------|------|------|-------|

## FIG. 2(a)

STORE
ADDRESS
OF
D(1) & A(1)

INDIRECT
ADDRESS

INCREMENT
VALUE

A R    3

4  10          2          51

I C R       A R       A R

'O'        15        14

11

A R    12

EP 0 044 562 B1

## FIG. 2(b)

MACHINE CYCLE

1 2 3 4 5 6 7 8 9 10 11 12 13 14 15 16 17 18 19 20

READ REQUEST OF A(1~5)    A(1)      A(2)      A(3)      A(4)      A(5)

READOUT OF A(1~5)      A(1)      A(2)      A(3)      A(4)      A(5)

ADDRESS CALCULATION AND READ REQUEST FOR D(A(1~5))    D(A(1))    D(A(2))    D(A(3))    D(A(4))    D(A(5))

READOUT OF D(A(1~5))    D(A(1))    D(A(2))    D(A(3))    D(A(4))    D(A(5))

## FIG. 3

FIG. 4